Europäisches Patentamt

European Patent Office

Office européen des brevets

(19)

(11) **EP 1 318 495 A1**

(12) **EUROPEAN PATENT APPLICATION**

(43) Date of publication:
**11.06.2003 Bulletin 2003/24**

(51) Int Cl.$^7$: **G09B 23/20**

(21) Application number: **02027187.0**

(22) Date of filing: **05.12.2002**

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(30) Priority: **05.12.2001 US 1802**

(71) Applicant: **Trell, Erik Yngvar**
**582 28 Linköping (SE)**

(72) Inventor: **Trell, Erik Yngvar**
**582 28 Linköping (SE)**

(74) Representative: **Norén, Per Bo Arne**
**SWEDPATENT AB**
**P.O. Box 186**
**746 24 Balsta (SE)**

(54) **Rendition and exploration of real space elementary particle states, transitions, properties and processes**

(57)    An ordinary physical construction kit of elementary particle gauge vector elements and symmetries which in an applied arbitrary unit scale and primarily within a separate Cartesian co-ordinate segment, by an exemplified direct structural build and installation as well as by equivalent operations also covered by the invention in computer or other figurative medium, exactly and exhaustively manufactures the real space elementary particle spectroscopy.

Fig.3

**Description**

In order to place the invention in its actual demand, supply and valuation position, some of the more relevant theoretical and experimental background and facts will be briefly recapitulated in the nearest following. First and at large it may be noted that Natural History in general today has become more and more nanotechnological and at the same time direct descriptive and reproductive. One outstanding exception is elementary particle physics where, at the very entry of otherwise throughout homogeneous material exposition, it so far has not been possible to maintain and lodge the constitution and organization encountered in the rest of the observable world.

On the contrary, in a recent survey of "One Hundred Years of Quantum Physics", Daniel Kleppner and Roman Jackiw in the leading *Science* magazine (volume 289, 2000, p 893) concluded that "physics today has this in common with physics in 1900: It remains ultimately empirical - we cannot fully predict the properties of the elementary constituents of matter, we must measure them". This especially applies to the "masses, charges, and other properties of the fundamental particles" which still "need to be found from experiments" whereas "an ideal system would predict all of these" *(idem),* including, importantly, also the channels which are likewise uniquely generated by and as part of the present invention directly and exhaustively as appearing in reality.

On the immediately larger scale, that of the atom, there is now solid tunneling microscope photographic evidence that ordinary spherical geometry and symmetry prevail and that also in mathematical terms, in the words of Paul L McEuen (Artifical Atoms: New Boxes for Electrons. *Science,* volume 278, 1997, p 1729), "an atom can be thought of as a spherically symmetric box". For logical reasons alone it is not only natural but obligatory that the fundamental constitution of matter continues into its actual footing. And it is now concretely defined that in a direct spherical rendition "the proton's volume...has a diameter of about 1 fm = $10^{-15}$ m" (Rosner G. How Strange is the Proton? *Science,* volume 290, 2000, p 2083).

Moreover, leading theoretical physicists like R. I. Jaffe (*Nature*, volume 268, 1977 p 201), have long realized that the elementary particles in the shape that they definitely step out of their mathematical algorithms to join and build up the immediately next levels of the material world must be congruent "extended, geometrical objects" with the "proton as the preferred (ground) state of the system" so that their "properties are attributable to this nonpertubative ground state" by "an operational description..(*through*)...a semiclassical approach similar in spirit to Bohr's treatment of the hydrogen atom".

Simultaneously, many, like R. Petti (Why Math-Software Development Counts. *Computers in Physics* volume 8, 1994, p 623) have predicted that "the scientific content in a physical model might in the future be captured in simulation" and that, indeed, "mathematical research as well as physics and many other fields would benefit from increased emphasis on development of deployable software. All this sets the stage and shows the great needs and value of an ordinary structural model of the elementary particles which in real space geometry enables and performs replication, exposition and figurative - e.g. ordinary graphical, computer animation or holographic - as well as material - e.g. building model or sculpture etc. - rendit on and production of observed transitions as well as physical properties and behavior over the wide range of the elementary particle spectroscopy.

Again, the authorized scientific procedure of such an "operational description" of the elementary particles and features as "extended geometrical objects" by, in consequence, "a semiclassical approach similar in spirit to Bohr's treatment of the hydrogen atom" is distinctly laid down in the just quoted prescriptions by Jaffe that their "properties are attributable to"...."the proton as the preferred (ground) state of the system." The proton is the parent of the so called strong interactions and it is likewise scientifically established that, as affirmed, for example, by Lewis Ryder, "SU(3)....is undoubtedly the symmetry group of the strong interactions" and is "mathematically identical to the group of rotations in ordinary space" (L. H. Ryder. *Elementary Particles and Symmetries,* Gordon and Breach, NY, London, Paris, 1975).

The strong interactions specifically govern the baryon class of elementary particles. However, the fact that SU(3) also covers the respective subgroups: SU(2) x U(1) for the so called weak interactions of the mesons, and U(1) for the lepton and boson family, enables an ordinary geometrical reproduction and display of them, too, by their, once more quoting Ryder, "mathematically identical" ordinary space representations. It is the resulting real geometry retrieval, projection, rendition and manufacture of the full elementary particle spectroscopy which constitutes the totally new and previously lacking method and device of the present invention. The universally acknowledged canonical theoretical prescriptions exist but it has obviously not been evident before to those skilled in the art that the quintessential step to a concrete and faithful physical realization is an ordinary three-dimensional projection which simultaneously is parent to the complex Lie groups and algebras that hitherto confined the hence seriously deficient structural reproduction schemes to a two-dimensional plane.

The earlier United States Patent 4,452, 590, issued June 5, 1984, for the first time embodies a real three-dimensional model of Baryon states and a device of producing such models. However, it is important to emphasize that the said patent is (a) confined to the Baryon, i.e. does not model the Mesons, Leptons, Bosons etc. elementary particles, and (b) comprises a "form permanent body divided into two halves" where the deductively found outer shapes of a few basic varieties are obtained in an ad hoc way by the (c) concentric and (d) external casting of the respective unit volume-preserving shapes by this ruler or mould which hence applies the rigid extrinsic transformations from without over (e) the whole particle encasement.

This is generically and methodologically different from the present invention where, including *Charm* and *Bottom* flavors, too, all Baryons as well as Mesons, Leptons and the so called Gauge Vector Bosons are constructively and flexibly generated and shaped from and by the system and its constituents themselves. Furthermore, while the former device as described before was centered, the present, like the original Lie groups and algebras (and similar to, for instance, statistical diagrams), appears from and on the surface of the particles and linearly independent in any of the four arbitrarily positive and four arbitrarily negative equatorial half-plane Cartesian segments of ordinary space. They might be reflected in opposing/adjacent segments but, like the surface differentials later shown to correspond to the mesons, are *per se* autonomous in the own segment where the principal unit gauge consequences and quantum number alterations, that as dictated in the foregoing are relative and "attributable to the nonpertubative ground state" of the perfectly spherical Proton (or, with corresponding minimal modifications in relation to the surrounding inertial frame, which therefore don't need to be described in detail here, the Neutron Nucleon moiety), fully persist.

The Leptons, however, are known to encircle the entire Nucleon domain, as will likewise be seen to be the case in the invention. Similarly, in reality as well as in the invention, the Gauge Vector Bosons represent the whole Nucleon, namely, the totality of its interchangeable Quark-Gluon root vector/Gluon-Quark momentum vector elements.

Apart from thereby adequately lodging anti-particle states and events, too, the aforesaid realistic neighborhood structure moreover suggests a heuristic explanation of the short lifetime of localized transformation modes referred to as resonances when further accommodated in the global environment. This is true also of the low "background noise" which straightforwardly represent events not exactly following the preferred modes governed by the principal transformation lattice symmetry.

The model and device hence remain true to physical reality and formulations as well as the previous patent insofar as retaining the firmly established unit sphere projection of the ground elementary particle domain. It may then be noted that the invention is not about this physical entity as such in the first place but a new and intrinsic method and device of replicating, visualizing, animating, producing and exploring observed elementary particle spectroscopical transitions, states, modes, properties and processes relative to it in a way that is moreover entirely faithful and contributing to the most eminent scientific theories and understanding.

Analogously applies to the previously described Baryon mass derivation as inversely proportional to the minor semiaxis of volume-preserving ellipsoid transformations. It will here be recapitulated, and expanded with masses and their formula of the Mesons, Leptons and Bosons, which are part of the invention in the meaning of being uniquely manufactured by it, whether materially, graphically or by computer animation.

However, it remains that the principal innovation part is that both the mass and electromagnetical and other quantum numbers of the elementary particle transformations come out from the pieces and operations of the invention itself. In any case, since they will be seen to be expressions of the obtained reproductions, they belong to the priority of the invention as parts of its exposition of the particle properties in keeping with the cited request that the "ideal system would predict all of these". This applies also to all the states that are not exemplified in the present application but which specifically and exclusively can be reproduced and explored by the invention as well.

As expounded in the following, the invention hence uniquely realizes the aforementioned highly wanted "ideal system" that as also quoted from Kleppner and Jackow does "predict all of these". It has already been established that the relevant ordinary spatial image of SU(3) results from said complex transformation group's so called orthogonal coset decomposition, SO (3) x O(5). It has also been shown that SO(3) x O(5) and its algebra can be projected in real geometry, and the present invention gives the distinct prescriptions and elements of the defined structural making of this by the specific construction components and their equally specific composition, arrangements and assemblage which perform it, whether by an actual building kit as in the here exemplified version or by altogether equivalent (and hence also covered by the invention) means and operations in computer, holography or other visual reproduction.

**Ground Nucleon Domain**

The physical structure constituting the ground Nucleon domain is obtained by building the combined SO(3) x O(5) spatial lattice that integrates both the internal and reference coordinate and transformation matrix in the same way as it is now understood that there is a flux between Quarks and Gluons, for instance, as expressed by Rosner *(Science,* volume 290, 2000, p 2083), that "the Gluons can temporarily split into quark-antiquark pairs." The corresponding root constituents are defined as straight axial vector elements of two sizes; one of length = 1, and the other of length $2^{1/2}$ (= square root of 2) in arbitrary unit scale (in absolute terms around ½ fin).

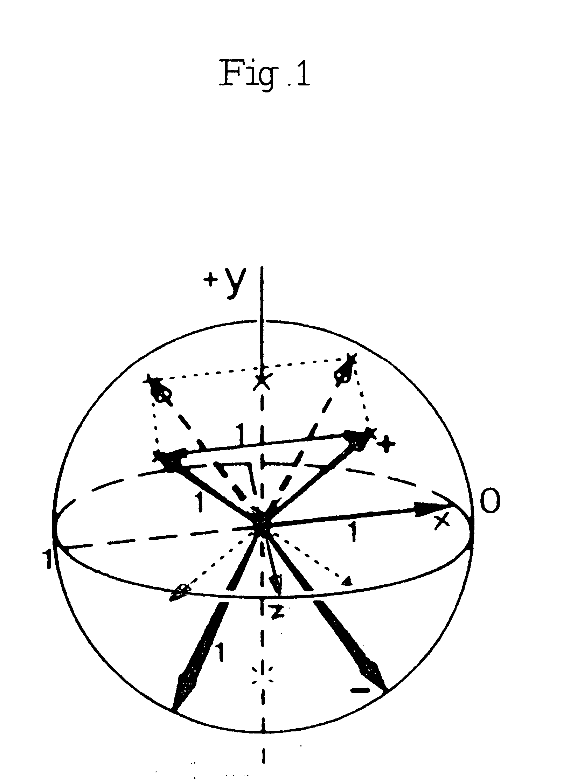

The further deployment of these vectors monitors all types of particle transformations and their reciprocal interactions as will be described in the respective context. First, eight of the vectors of length = 1 (in the applied arbitrary scale, which from now on is implied) inclined 60 degrees to each other in the two equatorial half-planes and hence four in each of these, all converging centrally, are installed in a sphere of radius = 1 in the applied scale. By the 60 degree prescription they will form a primary scaffolding in a duplicated diagonal orientation as outlined in Figure 1.

To erect the remaining linearly independent root vector planes the ordinary Cartesian coordinate axes are mounted by four of the length 1 vectors (here aligned horizontally; perpendicular plane orientation is entirely equivalent but not exemplified) 90 degrees inclined to each other and 60 degrees to the diagonal root vectors so as to have a mutual center and outline the lateral ($\pm$X) and sagittal ($\pm$Z) axes. This is shown in Figure 1 as well, where also the vertical axis ($\pm$Y) is arranged.

The Nucleon is embodied by the SO(3) coset and physically realized as a volume-preserving sphere with radius of length = 1 in the arbitrary scale and spanned as well as coordinated by the root vector lattice just described. In preserving symmetry as well as gauge this concrete and reproducible physical object adequately represents the modern quantum chromodynamical elementary particle conception. It is also seen that the hexagonal SO(5) and the orthogonal SO(3) lattices overlap in the horizontal plane (or vertical if chosen) so that from any side regarded two $A_2$ Lie algebra diagrams are set up mirroring each other. Reciprocal to the minor semiaxis length, the mass attributable to the Proton is obviously the Proton mass, $m_p$, divided by one; $m_p/1$ = 938.27 MeV/1 = 938.27 MeV, which can be so expressed by gauge or equivalent scale along the root vector itself in the material model as well as in computer, holographic or other figurative realization also covered by the invention.

Furthermore, these $A_2$ Lie algebra root space, or, in standard physical nomenclature and role, $t$ isospin vectors extend in steps of what in every respect comprises the discrete electromagnetic charge levels including its positive and negative varieties in alternating $t$ isospin orientations along the oblique vertical plane and the neutral charge equally natural over the straight vertical as well as horizontal planes.

With reference to Figure 1, the spherical shell of the Nucleon can be spanned over the scaffold set forth by the unit length $t$ isospin vectors just reproduced, preferably here exemplified and manufactured as a rounded, transparent or opaque, colored or uncolored, pliable membrane of radius = 1 in the applied scale, through which the y axes extend and which can likewise be produced and further manipulated automatically or by command in computer, holographic or other figurative medium also covered and comprised by the invention. The same applies to the encasements to be described uniquely furnished by the invention of specific as well as general Meson and Baryon states, whereas the Bosons and Leptons as accounted for below are constituted solely by their one-dimensional root vector elements and direct or superscribed, straight and curved linear sequences of these, respectively.

**The Gauge Vector Bosons**

To complete the Nucleon matrix and scaffolding also the modern understanding of the Quark/Gluon isospin/binding forces and their intermutability are uniquely realized by the invention. According to Rosner *(Science,* volume 290, p. 2083, 2000) "the Gluons are exchanged between the Quarks" as the "strong forces that hold the Proton together" and "can temporarily split into Quark-Antiquark pairs".

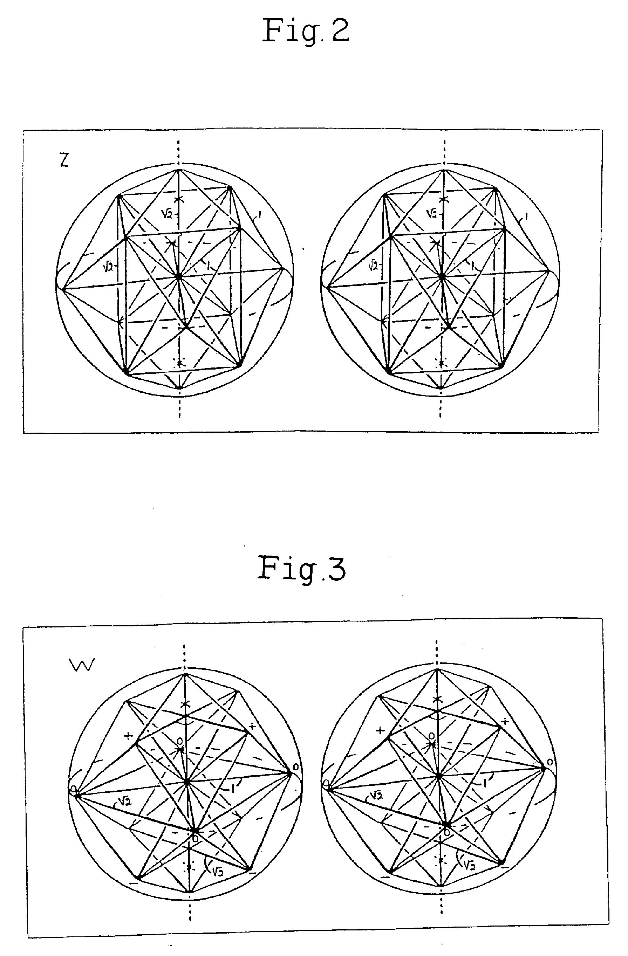

Such is prima facie the case in the invention, too, where, with reference to figures 2 and 3, the Gluon bindings between the Quarks are manufactured, concretely as here exemplified or by completely equivalent operations in computer or other figurative animation, by straight vector connections of two possible orientations, orthogonal and diagonal, respectively, between the $A_2$ diagram, so called $t$ isospin root vector end-points. As exchangeable with Quarks these Gluon bindings may be deployed alone or coupled together as one-dimensional Lepton vectors, preferably of the Neutrino and Photon kinds. In their singlet ground condition as the "forces that hold the Nucleon together" they obey the same energy relation inversely proportional to the Proton radius length as that imposed by, e.g., the "Quark-Gluon interaction pressure" formula, $\Delta p = h/\Delta x$ as stated by Jaffe (*Nature,* volume 268, p. 201, 1977). Their collection in every respect realize the Gauge Vector Boson particles.

The designation Gauge Vector Bosons epitomizes the current understanding that these virtual 'lump-sum' elementary particles constitute the totality and its gauged mass of the Quark/Gluon root vector and Gluon/Quark momentum vector elements and their bindings, as exposed and released typically in high-velocity collisions between a Proton and an Antiproton and hence actually by the addition of the constituents in two mirrored Nucleon domains. Therefore, figures 2 and 3 depict both moieties in the respective state, where the separate electromagnetical charge levels are not indicated because of this reflection.

The Z Gauge Vector Boson.

Further implied in the Gauge Vector Boson designation is that the properties are primarily embodied by their vector elements. When the root vectors of a Nucleon domain are virtually cracked also the Gluon isomers, i.e. the interchangeable and thus equivalently oriented and "strong forces that hold the Proton together" (G. Rosner, *Science,* volume 290, 2000, p 2083) extending between them are detached so that the total energy amounts to the sum of both modes. In the present invention the $t$ isospin root vector endpoints may be knit together by such bonds in principally two alternative ways; either orthogonally or diagonally. The gauge is the same as that of the $t$ isospin; the interconnecting vectors will be of length 1 and $2^{1/2}$ in the applied arbitrary scale.

As shown in Figure 2, the Z Gauge Vector Boson is constructed by the orthogonal variety of internally connecting the Nucleon $t$ isospin vector endpoints. To that end, straight force binding vectors are spanned, direct materially as here or by identical production in computer, holography or other figurative assembly also covered by the invention, between the vacant $t$ isospin endpoints in the predilected orthogonal mode. With reference to Figure 2, in each of the Z Boson moieties, adding to the 2 y axes of length $2^{1/2}$ and 8 charged and 4 neutral $t$ isospin vectors of unit length, 4 vertical beams of length $2^{1/2}$ are inserted centrally, between the ends of which 8 horizontal bonds of length 1 are arranged. Finally, the peripheral, x, y and z neutral $t$ isospin endpoints are connected by in all 24 60° inclined electromagnetically charged but canceling diagonal strings of unit length in the applied arbitrary scale.

The complete fission event of two Nucleons' combined isospin and binding vectors, thus disjoins 2 x 32 electromagnetically charged and 2 x 12 neutral pieces of unit length plus 2 x 6 vertical pieces of length $2^{1/2}$. The threshold energy of this reaction amounts to the Boson mass (whereupon the excess kinetic energy of the collision may produce jets of a plethora of secondary particles).

Since the energy of length vectors relating one-dimensionally to the mass of the proton reciprocally to the radius length of this is 1 x 938.27 MeV in the vectors of unit length and $1/2^{1/2}$ x 938.27 MeV in the vectors of length $2^{1/2}$, the grand total in the Z Gauge Vector Boson variety equals 2 x 44 x 938.27 MeV plus 2 x $6/2^{1/2}$ x 938.27 MeV = 90539 MeV = 90.5 GeV which fits exactly with the recorded average close to 91 GeV. Similarly like in reality, the electromagnetical charge levels out to neutrality.

The W Gauge Vector Boson

This, considering losses and extras in the laboratory set-up, complete identity both phenomenologically, qualitatively and quantitatively is equally pronounced in the W variety, where the central Gluon force vectors assume the alternative diagonal orientation. With reference to Figure 3, the construction in each moiety still employs the ground 2 vertical y axis pieces of length $2^{1/2}$ and 4 neutral and 8 charged $t$ isospin pieces of unit length, connecting their endpoints horisontally in 45° angle against the x and z axes by totally 8 gluon vector elements of length $2^{1/2}$; 4 over the equatorial plane and 2 in each of the charged ones. To that are attached the same 24 outer diagonal bonds as in the Z state, so that the mass of the sum neutral W charge isodoublet is 2 x 36 x 938.27 MeV + 10 x $1/2^{1/2}$ x 938.27 MeV = 80825 MeV = 80.8 GeV, which perfectly matches the recorded 80.6 $\pm$ 0.4 GeV.

**The Leptons**

The symmetry group of the Leptons contained under the SU(3) parent is simply U(1). The straightforward structural counterpart and realization are hence the linear Quark/Gluon vectors O(1) as carried out in the Nucleon and Gauge Vector Boson sections. The individual vector lengths are thus 1 and $2^{1/2}$ in the applied scale and these are in consequence bound in the particle domain as the constitutionally intrinsic quark/gluon singlets. The remaining Leptons, otherwise akin both by their one-dimensionality and in the accepted theories, are hence confined to the particle surface or environment as continuations of the same vector elements.

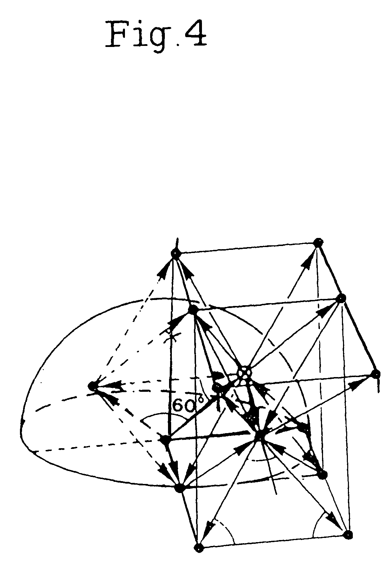

Extending the defined build of the root vector elements in the surrounding space, a hexagonal lattice is generated, as illustrated in one of the eight Cartesian segments of external space in Figure 4. It can be perpetuated endlessly and forms the global reference of the spectroscopical transitions and transformations as well as the common scaffold of all further particle events. These themselves may share the universal coordination or, in genuine transformations, assume the resulting own internal Quark/Gluon alignment, which will therefore deviate from the global co-ordination and render other than proportionately calculable brief accommodation there impracticable.

The Muon

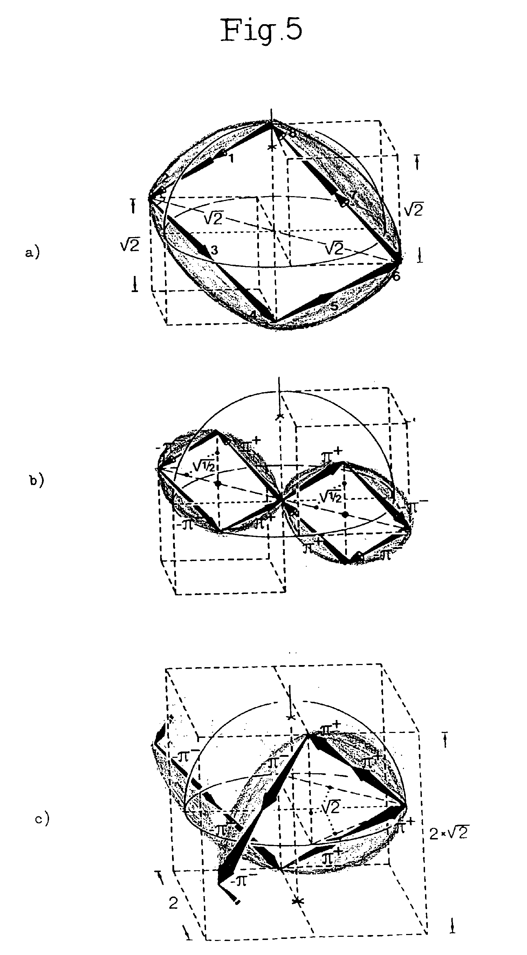

In this lattice the Leptons occur naturally as the possible permutations and settlements of the engaged vector elements' continuation. With reference to Figure 5 it is apparent that unit $t$ isospin vectors of the same, positive or negative electromagnetical charge can interlink with each other orthogonally in successive 90-degree or 90-180-degree angles to the effective diameter or radius of closed or helical, single- or double-loop orbits over the Nucleon domain surface.

This is structurally performed in the present model by the shown procedure, which generates different alternatives using up the central charge $t$ isospin root vectors simply by putting them together to closed paths in and over the Nucelon domain according to the outline in Figure 5 of single orbit (Figure 5a), duplicated orbit (Figure 5 b) and helical (Figure 5 c) sequences, upon which are mounted rounded half-orbit (or quart- or any other fraction-orbit) segments provided by material building pieces (shadowed in the Figures) in the present construction kit version or by exactly like linear elements and operations in the computer, holography or other figurative medium also covered by the invention.

The length of the effective radius of each such half-orbit segment is $2^{1/2}$ in the single-loop circular or helical variety and $(1/2)^{1/2}$ in the double-loop. The length of a full revolution can be calculated as $2\pi \times 2^{1/2}$ and $2 \times 2\pi \times (1/2)^{1/2}$, respectively, with consequential mass expression reciprocal to the Proton of $1/(2\pi \times 2^{1/2}) \times 938.27$ MeV and $1/[2 \times 2\pi \times (1/2)^{1/2}] \times 938.27$ MeV, which in both cases results in 105.59 MeV as compared with the recorded Muon mass of 105.66 MeV. Furthermore, the observed charge varieties (negative Muon and positive Anti-Muon) as well as the orbital spin are retrieved, too, so that the invention is a significant and eagerly called for advancement.

The actual Muon reproduction henceforth puts together the realized straight root vector beams of unit length and the further specified linear orbital segments, which are manufactured and mounted, whether materially or graphically, exclusively by the present invention but otherwise just like DNA or other molecular models are built and explored by the core elements and further at will complemented by colors, labels, scales etc.

### The Electron.

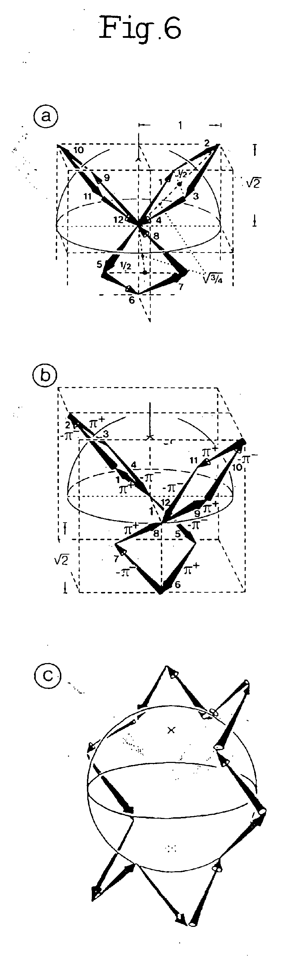

A second way of interconnecting the unit *t* isospin vectors of equal negative or positive electromagnetical charge is by alternative 60 and 120-degree turns, some basic modes of which are illustrated in Figure 6. As expressed by F. E. Close (*Nature*, volume 281, 1979, p. 104), there is a longstanding mystery "why do the Muon and the Electron have different masses?"

An answer is also provided by the present invention, where the Muon path is the closest one in the Nucleon domain and available to and therefore first occupied there by all the charged *t* isospin vectors so as to displace the Electron variety, a tendency, which, again with reference to Figure 6, is amplified because the single central loops of the path of the latter would pass into orthogonally adjacent Cartesian space segments which is forbidden for symmetry reasons. In consequence, the Electron/Anti-Electron (Positron) trajectories are moved to the nearest available atomary layer at a radial distance outside of the center of the Proton 137.035986 (Fine Structure Constant, FSC) times its radius length.

If lodged directly over the Nucleon domain, the length in the arbitrary unit scale of each Electron/Positron loop in the closed (Figure 6 a) or helical (Figure 6 b) clover-leaf mode would be $2\pi \times (1/2)^{1/2}$ and of the total orbit $3 \times 2\pi \times (1/2)^{1/2}$, which can also be distended to a sinusoidally undulating single revolution according to Figure 6 c. The real length in the nearest atomic shell in all cases thus amounts to FSC $\times 3 \times 2\pi \times (1/2)^{1/2}$ with resulting mass of $1/[\text{FSC} \times 3 \times 2\pi \times (1/2)^{1/2}] \times 938.27$ MeV = 0.5137 MeV; Again just as the 0.511 MeV (and the charge and the spin) in the registered Electron/Positron.

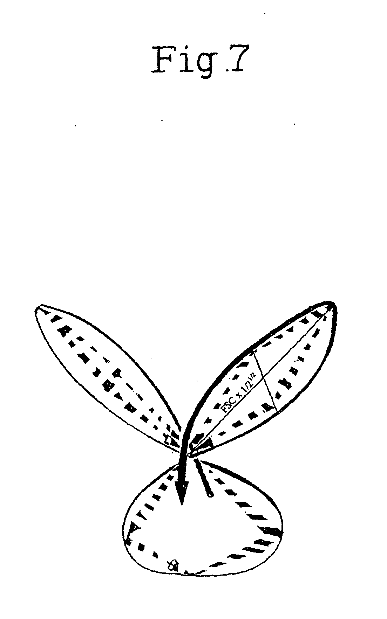

When structurally building the Electron/Positron, the invention provides and mounts the full actual orbits (or fractional segments thereof) in closed or helical clover-leaf and single-loop forms and in all cases of length FSC $\times 3 \times 2\pi \times (1/2)^{1/2} = 1826.5$ in the applied scale. With reference to Figure 7, the helical variety is manufactured here by the attached orbital segments connected to the Nucleon center propagation axis by the radial element FSC in the material rendition here exemplified or by the same means in the computer or other figurative medium.

### The Neutrinos

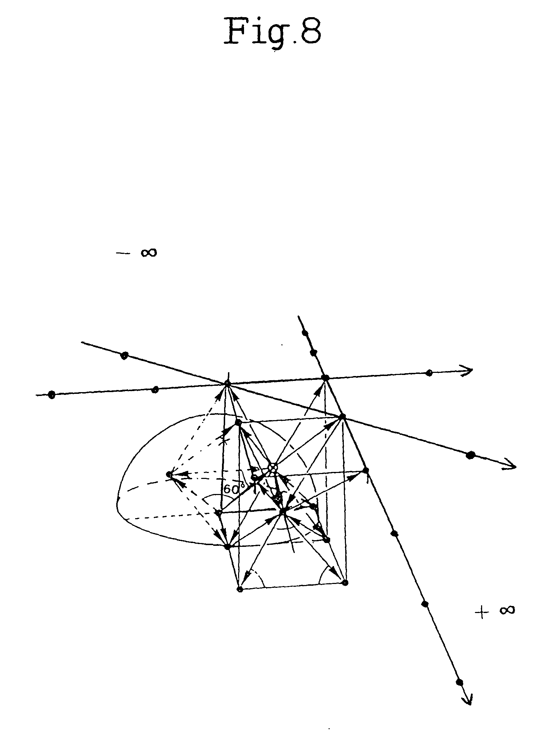

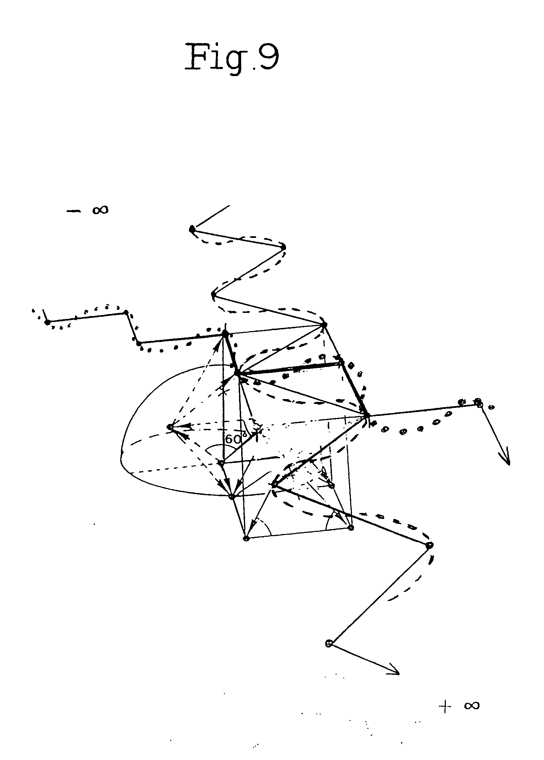

When connecting the electromagnetically neutral, that is, in the chosen alignment, orthogonally vertical and orthogonally or diagonally horizontal line vector elements from the Nucleon domain there are two basic possibilities. One, with reference to Figure 8, is that the chains can be assembled in 180 degrees connection and then they radiate from the centre in endless straight lines of two kinds, put together by vectors of length 1 and $2^{1/2}$ (or longer dependent upon source state) respectively, and in both with mass expression $1/\infty \times 938.27$ MeV = 0 MeV, and hence in every respect, including consequential low interactivity and zero spin and charge, identical to the two types of Neutrinos existing, that related to the Muon of steplength = 1 and to the Electron of steplength $2^{1/2}$ (and other lengths over other states) in the applied scale. When structurally performing the Neutrinos materially or figurally, the invention therefore, with reference to Figure 9, delivers the corresponding vector pieces and assembly, which in the ground state are radial beams continuing at indefinite length as straight iterations from the neutral unit and $2^{1/2}$ root vectors in the Nucleon core.

### The Photon.

As shown in Figure 9, the diagonal as well as orthogonal electromagnetically neutral root vectors of ground length 1 and $2^{1/2}$ (or longer dependent upon source state) can also be joined in a coherent zig-zag fashion which remains confined to the neutral charge plane. In a spherical rendition it is sinusoidal, but spinless as well as endless, with resulting mass $1/\infty \times 938.27$ MeV = 0 MeV. This is the last possible permutation of directly interconnecting the one-dimensional constituent root vector elements of the invention whether materially or figuratively; and likewise yield the last remaining basic Lepton, i.e. the Photon, whose undulating trajectory profile suggests good interactivity in practice.

When structurally performing the Photons materially or figurally, the invention therefore, with reference to Figure 9, delivers the corresponding vector element pieces and assembly, which are radial beams sinusoidally continuing at indefinite length as zig-zag iterations from the neutral unit and $2^{1/2}$ root vectors in the Nucleon core (or longer or shorter, with consequentially shifted wawelength, dependent upon source state).

Both separately and in various constellations the centripetally radiating Neutrino and Photon beams offer an artistically, scientifically and technologically highly pleasing component of the invention possible to manufacture, concretely or by computer/holography implementation also covered by the invention, by putting together the respective, straight and sinusoidal structural building pieces of defined interval length and splicing.

The waving composition of the Photon vector steps further enable an arrangement in variably dense helical sequences with straight or turning frontal propagation so as to present an apparently slowed or even simultaneous course in the likewise globally advancing observatorial frame, as can occur in Nature, e.g. ball lighting, as well as in recent laboratory experiments.

**The Mesons**

The Mesons are an elementary particle family intermediate between the geometrically one-dimensional Leptons and three-dimensional Baryons. The transformation group of their so called weak interactions is known to be SU(2) x U(1), and the geometrical counterpart that this dictates and for the first time is realized for material and equivalent figurative rendition by the present invention is SO(2) x O(1). In mathematical terms the two-dimensional part here, in the direct geometrical rendition of SO(2) is a two-dimensional circular-elliptic sector which contributes to the mass expression symmetrically, i.e. proportional to its surface area in relation to the ground Proton equatorial plane, while the O(1) part, likewise in full compliance with the existing theoretical prescriptions, acts multiplicatively in inverse proportion to its length as the straight radial or curved peripheral third extension or momentum (L) vector of the resulting product domain.

Also like in reality, the Mesons primarily occur as differential elements between Baryon transitions either inside or on and from the surface of these. The ground Mesons are the charged and neutral Pions, and they display both modes of generation. Since they are described, for instance by Ryder (*Elementary Particles and Symmetries,* Gordon and Breach, NY, London, Paris, 1975), as "traditionally the agents of nuclear force", they are exemplified in the present invention by this internal mode whereas surface differentials will be described in other Meson states. In either case the structural embodiment of these themselves will be composed by the invention whether materially or figuratively through the direct assembly of the defined structure elements and their architecture. Furthermore, the transitions and their channels when involving Meson modes are specifically performed by the charge-bearing of their root vector steps so as to lead to the longest side or semiaxis endpoint at a discrete electromagnetical charge level in the generated state, whereas the other, always neutral root vector of their SO(2) planes constitute the lepton part of the event.

$\underline{\pi^0}$

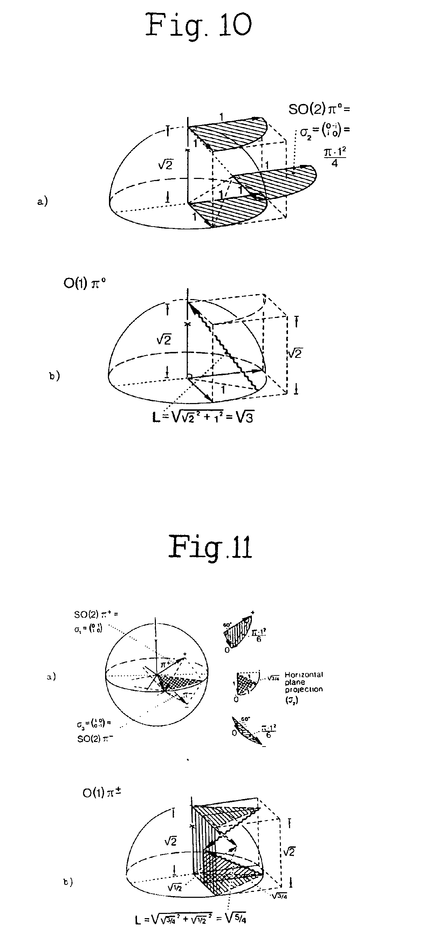

The neutral Pion is the lowest mass number Meson, according to observations close to 135.0 MeV, and to some 98 per cent has a two-gamma channel which (like other observed modes) with reference to Figure 10 a is directly constructed by two alternating adjacent neutral root vectors in the horizontal plane, 90° inclined and hence formally of the theoretically prescribed Quark and Antiquark flavor in relation to each other. It is obvious that they span an area one quarter of the ground Nucleon equatorial plane, with a corresponding mass content of ¼ x 938.27 MeV. When decaying, the two sides will radiate out in both directions continuing their opposing paths in continuation of their 90° turns so as to assume the physical nature and shape of the Photon elementary quanta here uniquely manufactured by defined linear construction elements in material or equivalent figurative production.

With reference to Figure 10b it is further seen that in each altering level, the free meridian distance/ extension to the next neutral Pion SO(2) plane is $3^{1/2}$ which in a horizontal quartertorque of the Nucleon outlines the side of a 90° turning top segment. Whether materially as here exemplified or figuratively in computer or holography or other graphical display $\pi^0$ is hence fully reproduced by assembly of the respective and specifically by the invention realized construction elements which further include that the constructed product domain can be clad by a transparent or opaque membrane or other coating.

The exhaustive identity with observation as well as theory in terms of transformation group composition, neutral charge and channels is equally pronounced for the mass: the direct formula and outcome, possible to mark in the physical or figurative manufacture, is ¼ x $1/3^{1/2}$ x 938.27 MeV = 135.4 MeV; an exact and unequalled match in full compliance, obedience and homage of the prevailing physical understanding. Hence, also the scientific and pedagogical value of the present invention is very large.

$\underline{\pi^{+,-}}$

The same is true of the charged Pions. A realistic reproduction, animation and manufacture method and device as singularly provided by the present invention is of the utmost not only economical but scholarly value because of the further exploration its general principles and means allow, covering the totality of the spectroscopy and individual and collective elementary particle events and processes occurring in practice.

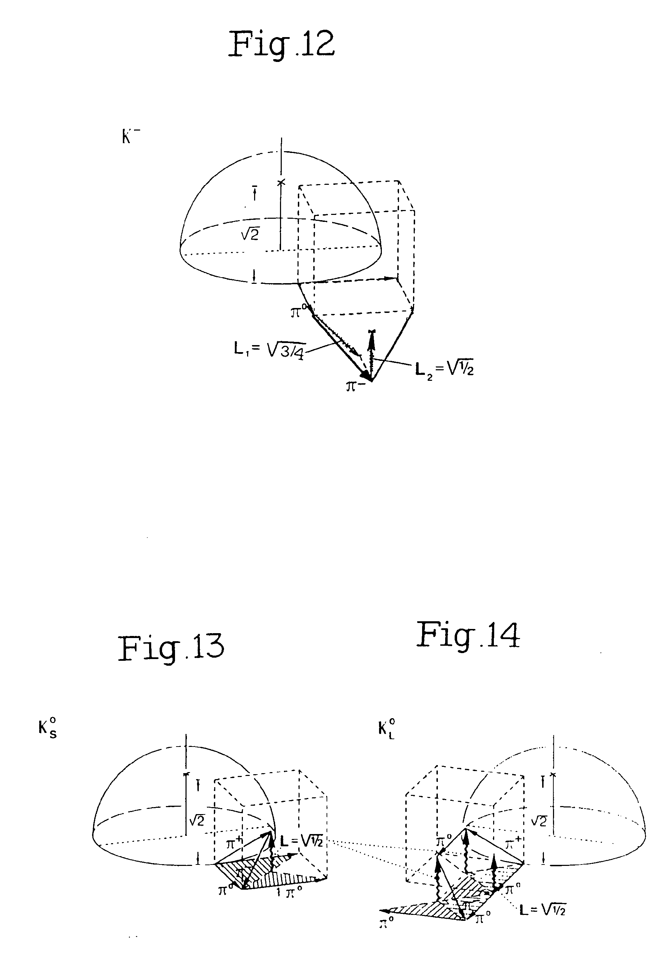

The charged Pion mass is measured at 139.6 MeV, and primarily has $\mu - \nu_\mu$ or $e - \nu_e$ channels so that, with reference to Fig. 11a, its SO(2) plane is constituted by one charged, diagonal $A_2$ root vector and its neutral horizontal plane neutral $A_2$ root vector, which hence has no neighbor to recoil the turn of but in the charged Pion decay will endlessly continue its straight direction as the Neutrino part of the observed primary channel where the charged root vector part will continue as either a Muon or an Electron dependant upon the setting or as open alternatives.

All are uniquely provided and produced by the invention by the direct building of the corresponding vector elements. It is obvious, as shown in Fig 11 a, that each such sector involving a charged and a neutral $A_2$ root space diagram vector will cover an area 1/6 of the perfectly spherical Proton equatorial plane, and therefore carry a mass equivalent of 1/6th of the Proton mass. It is further seen that the orientation of the sector is diagonal along the normal of which the distance to the next encountering charged Pion is ½, so that the L vector as here outlined in a projection over the Cartesian reference planes is now $(1 + 1/22)^{1/2} = 1.25^{1/2}$ and the resulting mass of the product domain (which like the neutral Pion and all other Mesons can be clad materially or figuratively by a colored or uncolored, transparent or opaque membrane or other coating) is $1/6 \times 1/1.25^{1/2} \times 938.27$ MeV = 139.9 MeV in comparison with the recorded 139.57 MeV: likewise an exact and unequalled match.

### $K^{+,-}$

Whether materially as here exemplified or figuratively in computer or holography or other graphical displays all following Mesons can be fully generated by assembly of the respective and uniquely by the invention reproduced components, and their product domain likewise clad by a transparent or opaque membrane or other coating. This will be apparent in the next Meson generation which will be manufactured in full, whereas the quite copious rest emerging from differentials between frequently overlapping Baryon states and resonances will not be exemplified but can be exhaustively explored and reproduced by the here invented method and device, too. Instead, the completeness and faithfulness both in respect of channels and masses will ultimately be described in the basic Meson representatives of the extra degrees of transformation freedom assigned to the *Charm* and *Bottom* flavors of quark.

The first second-generation Meson is the charged Kaon, which will here be produced in the negative electromagnetical charge variety. As shown in Figure 12, this is reached/constructed by the addition of a neutral and a neutrally charged Pion root vector, so that their free domains can be added. It is immediately seen that the L vector of the neutral Kaon SO(2) plane amounting to 1/4 of the Proton equatorial plane area is $0.75^{1/2}$ down to the negative electromagnetical charge level so that the product mass of the neutral part is $938.27/4 \times 1/0.75^{1/2} \times 938.27$ MeV = 270.9 MeV. The L vector of the negative part straight up to the neutral plane is $0.5^{1/2}$ with resulting product mass $938.27/6 \times 1/0.5^{1/2}$ MeV = 221.2 MeV, which together with 270.9 MeV gives 492.1 MeV in comparison with the measured 493.65 MeV: again retrieved by direct assembly of defined construction elements to the scaffold of a geometrical domain, which like the other mesons (as henceforth not specifically stated there) can be coated in the material construction kit or equivalent figurative medium and operations.

### $K^0{}_S$ , $K^0{}_L$

Then it is only to continue the assembly in the following. Next is the neutral Kaon which comes in two racemic forms, one "short" and one "long" and both in just that capacity and close detail produced by the invention. To start with the short one, Fig. 13 gives the straightforward construction by the two alternative main channels, $\pi^+ - \pi^-$ (69%) and $\pi^0 - \pi^0$ (31 %), which as mentioned before are assembled by putting together their respective root vector elements to structural steps in the physical transformation lattice, whether materially by the corresponding linear building elements of length in the applied scale = 1 as here exemplified or by equivalent figurative techniques also covered by the invention.

Two SO(2) planes are generated in this variety; one of area ¼ of the Nucleon equatorial plane, the appended one of half that size, both sharing O(1) L vector of length $1/2^{1/2}$ to the next realization of the same kind and likewise ready to directly install in its rendered shape to outline a product domain the mass content of which in the SO(2) x O(1) product relation is faithfully calculated according to the standard rules of addition of derivatives as $938.27/4 \times 1/0.5^{1/2} + 938.27/8 \times 1/0.5^{1/2}$ MeV = 497.60 MeV, completely identical to the registered 497.67 MeV. Again, the invention delivers not only the mass but the channels, charge spectrum an other tangible properties in unprecedented and unique agreement with reality.

This is true in $K^0{}_L$ as well. The observed dominant channels, here executed by the $\pi^0 - \pi^0 - \pi^0$ (21%) and $\pi^+ - \pi^- - \pi^0$ (21%) but equally practicable in the other, e.g. Pion-Muon/Electron-Neutrino modes, are immediately installed by the respective vector elements according to Figure 14 and now yield three 938.27/8 SO(2) planes so that the mass is $3 \times (938.27/8 \times 1/0.5^{1/2}) = 497. 60$ MeV, and remains the same also in nature so that what is said and made of the $K^0{}_S$ holds as well for the $K^0{}_L$.

### η

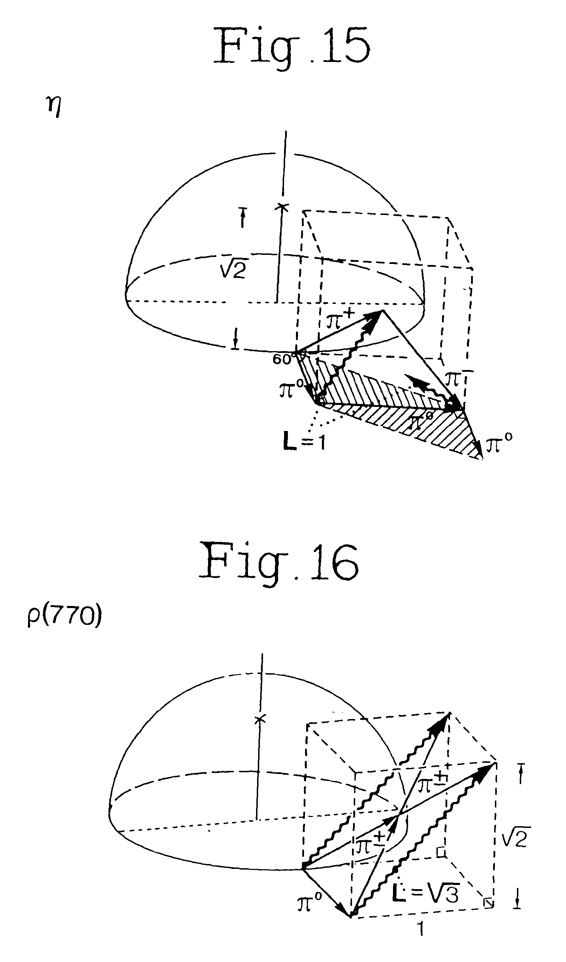

The fact that the secondary and ensuing generations of Mesons show mutual channels mean that they may represent alternatives of domain projection under this scaffold as well as in relation to the observatorial reference space. The latter alternative is particularly applicable when it comes to the higher mass number Mesons between the great numbers of transformed Baryon as well as other Meson states, and will as a rule not be exemplified here, but can be retrieved and explored exclusively by the invention. The η Meson is here as in reality, generated, too, by the main $\pi^0$ - $\pi^0$ - $\pi^0$ (30%) and $\pi^+$ - $\pi^-$ - $\pi^0$ (24%) channels as described in Figure 15. Two charged SO(2) and one neutral SO(2) plane are spanned in this variety, and with mutual L vector of length = 1 the mass expression is 1/1 x (938.27/6 + 938.27/6 + 938.27/4) MeV = 547.33 MeV, as close to the measured $548.8 \pm 0.6$ MeV as can at all be achieved.

ρ(770)

In the ρ(770) state, with reference to Figure 16 the virtually 100 % π - π channel (also the $\mu^+$ - $\mu^-$ and $e^+$ - $e^-$ channels can be produced by the corresponding building elements) facultatively project two SO(2) planes with 90 degree outer corner and effective radius base of $2^{1/2}$ and common L distance to the next lattice level of $0.75^{1/2}$ so that the SO(2) x O(1) product mass is 2 x 938.27/4 x $2^{1/2}$ x $1/0.75^{1/2}$ = 766.1 MeV to compare with the $768.3 \pm 0.5$ MeV as observed in practice.

ω(783)

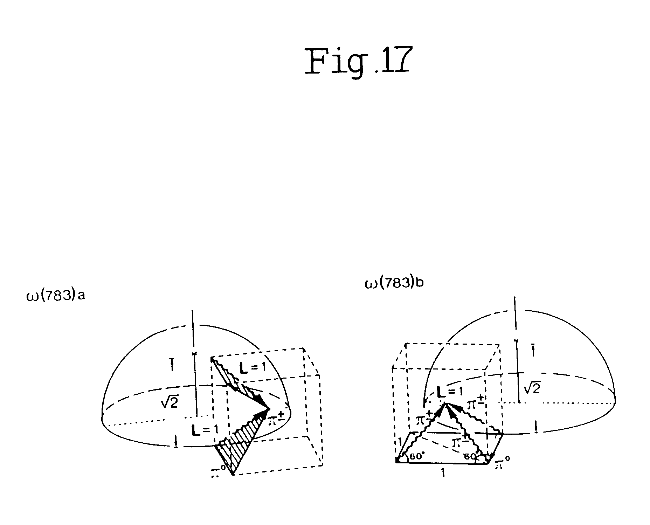

Further exhausting the projection options that can be directly built by the present invention, Figure 17 describes the manufacture of ω(783) where the performed $\pi^+$ - $\pi^-$ - $\pi^0$ mode (90%, also the others can be made) span two charged and two neutral SO(2) planes with mutual L vectors of length = 1 along the sides of the adjacent opposing planes, and mass of 938.27/4 + 938.27/4 + 938.27/6 + 938.27/6 =
781.9 MeV; absolutely identical with the $781.95 \pm 0.14$ MeV that occurs also in the experiments as a homologous alternative mode of differential exposition from the possibilities at hand. The identity between physical reality and the invention and its tangible manufacture whether material or figurative is again totally convincing.

D$^{+,-}$, D$^0$, $\bar{D}^0$

By the above, the invention's construction methods and executions have been deployed by the direct manufacture and mounting of defined ingredients of linear, plane and volume constitution whose assembly is also both part of and generating an integrated global reference and local transformation lattice that likewise is in complete agreement with the existing theories but has not before been realized in practice. Proceeding peripherally, successive transition layers are passed, which concretely form the so called J$^p$ quantum numbers as well, and where the possible transformation and projection permutations also increase exponentially just as in reality.

The variety of channel steps from successive parent generations, their different possible projections in the new states including alterations of the effective SO(2) radius like in ρ(770), and/or angular deviations from the global space accommodation with proportionally and hence calculably abbreviated lifetimes; all set up a rich spectrum which is amply embodied in the present invention. In plenty, patterns and properties it manifests the complexity of the real spectroscopy, which hence can be explored both as to the continuous background noise and sharper resonance peaks dependant upon alignment with the defined precursory structure.

As differential elements between the legion of other particles and with a permutative range of internal projections as exemplified in the recently described states, the meson family is extra profuse and frequently even diffuse with many overlaps. However, by the building pieces, steps and operations of the invention they can be explored and generated extensively, including as well the channels. This will be demonstrated at the most intricate and extreme end by the basic members of the *Charm* and *Bottom* flavors of quarks, both of which set up own series from the states they emanate from. Here, as mentioned, the ground members of the respective mode will be produced with detailed draft of the channel trains from the basic parent particles and they are fully representative of their respective kind showing that the invention uniquely cover and manufacture the *Charm* and *Bottom* flavors as well.

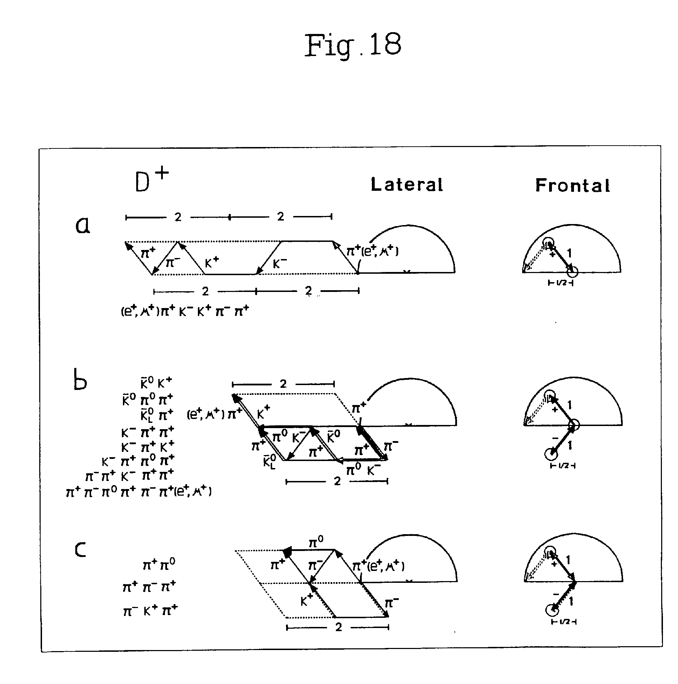

In its ground form, the D$^{+,-}$, D$^0$/$\bar{D}^0$ multiplet is manufactured just as in nature according to the exact blue-prints in Figures 18 - 19 by direct assemblage of the structural pieces of the defined Lepton and Meson vector steps extending from charged and neutral $t$ isospin root vector endpoints, respectively, on the parent particle surface, here a Nucleon.. Also other channels and parent states exist and can be recombined from the exemplary typical ones here rendered. In all events a domain is generated that shows the same electromagnetical and parity duplicity and the same mass content in addition to the exhaustive and extensive channels spectrum of the actual D multiplet.

It appears and is directed by the lateral and frontal plane projection drafts in Figure 18 a-c that all channels in the charged D variety converge to the respective electromagnetical charge level, here depicted for the positive variety (negative by mirror inversion), according to three assembly alternatives. In Figure 18 a, the longest vector chain is outlined giving a length of the embraced SO(2) plane = 4 in the applied scale. The positive $t$ isospin vector gives a second surface extension = 1 (also = 2 is feasible in a sequence reaching the other charge level but not shown here) of the oblique plane so constructed whether by the present material construction kit elements or by equivalent operations also covered by the invention in computer or other figurative medium. The extra degree of freedom prescribed for *Charm* realizes as an elliptic plane with major semiaxis = 2 and minor semiaxis = 0.5 (or in the other version = 1). The distance to the next event of the same kind is 0.5 to the flanking one from the same charge point (or 1 to the next parallell in the sum neutral plane) so that the SO(2) x O(1) mass in both cases is easily computed as 0.5 x 2 x 1/0,5 x 938.27 Mev (or 2 x 1 x 1/1 x 938.27 MeV) = 2 x 938. 27 MeV = 1876.54 MeV = 1.88 GeV, which complies exactly with the recorded charged D mass of 1.87 GeV.

Fig 18 b and c gives the facultative charged D construction, by the actually displayed vector element sequences, of the rim of an SO(2) plane of length = 2 and height = 2 in the arbitrary scale, and with distance to the flanking equal = 0.5 with mass expression again = 1 x 1 x 1/0.5 x 938.27 Mev = 1.88 GeV. As with all other elementary particles, and occasionally performed here in some of them, the invention also provides the scaffold and contours for covering, by automated or instrumented techniques and operations in material or figurative medium, the rendered domains by geometrically, preferably spherically, approximated, opaque or transparent, colored or uncolored envelopes in separate Cartesian space segments, or reflected in opposing or adjacent ones, so as to produce, in the applied scale, the complete physical embodiments.

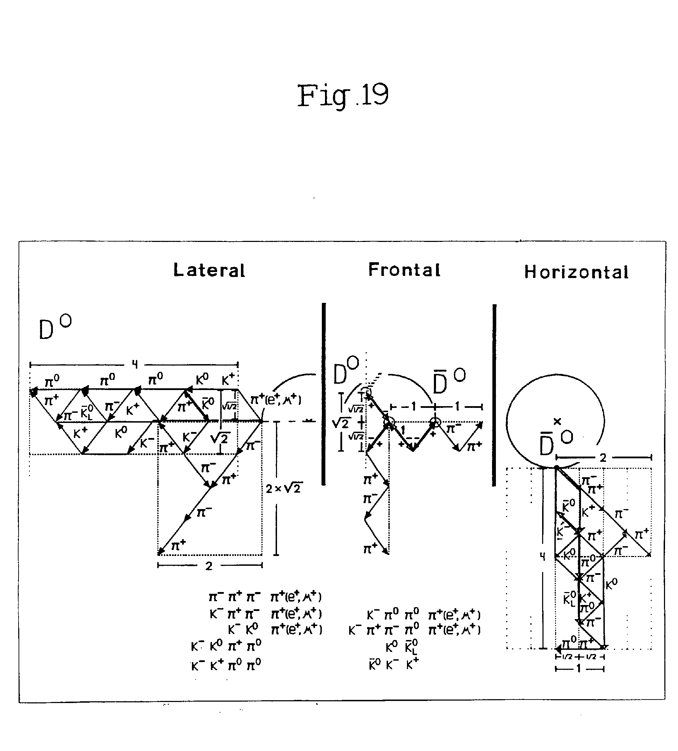

In the $D^0/\bar{D}^0$ isodoublet, fig. 19 gives the detailed building plan in plane projection. As in the charged edition, the typical and exemplary fraction of channels are drawn for the two isoforms. In the first an oblique SO(2) surface area of length 4 or 2 and width $0.5^{1/2}$ or $2^{1/2}$ is constructed, and with a distance to the next of $1/2^{1/2}$ the mass is $4/2 \times 2^{1/2}/2 \times 1/0.5^{1/2} \times 938.27$ MeV $= 2^{1/2} \times 1/0.5^{1/2} \times 938.27$ MeV = 2 x 938.27 MeV = 1.88 GeV against the experimentally assessed 1.86 GeV.

Likewise, in the $D^0 \bar{m}$ oiety, the constituent vector elements are put together to a surface 4 or 2 long and 1 or 2 wide, which, when reflected over the middle line has a mean distance to the neighbor = 1 and product SO(2) x O(1) mass 2 x 938.27 MeV = 1.88 GeV.

### $D_s^{+,-}, D_s^{*+,-}$

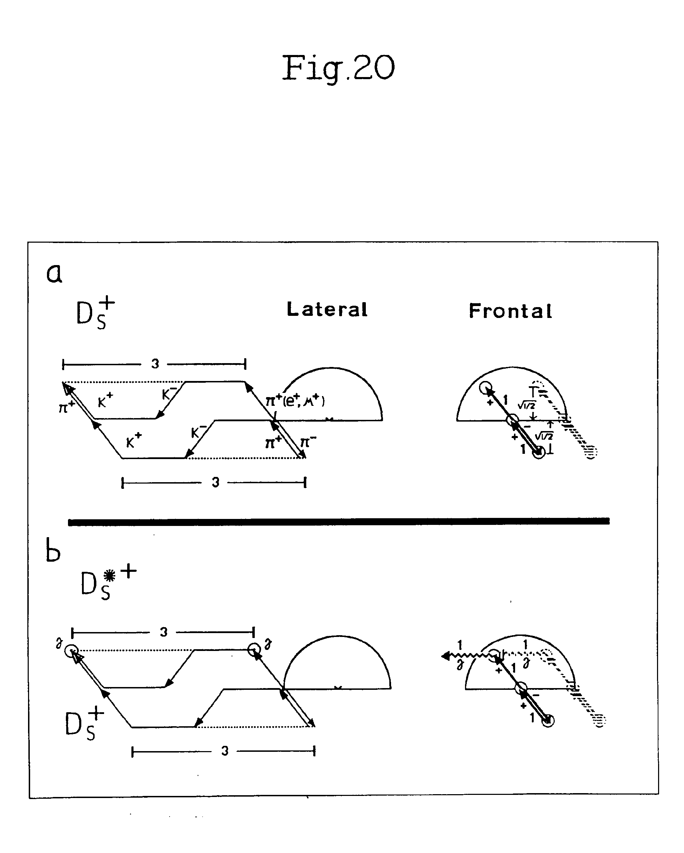

The $D_s^{+,-}$ and $D_s^{*+,-}$ are closely interrelated and the remaining of the stable charmed Mesons, why their construction drawing is executed here, too. They are equally direct geometrically retrievable, as is outlined in Fig. 20 a-b for the positive variety (negative by inversion). By sequencing its observed ground channels, the $D_s^{+,-}$ construction as projected in Figure 20 a, delineates a SO(2) domain length = 3 and oblique *t* isospin axis extension = 2. The height to the next equal such plane is $0.5^{1/2}$ and the mass formula thus $3/2 \times 2/2 \times 1/0.5^{1/2} \times 938.27$ GeV = 1.99 GeV, while the measured value is close to 1.97 GeV.

And the $D_s^{*+,-}$ has a sole $D_s^{+,-} - \gamma$ mode, as constructed in Figure 20 b setting up a folded SO(2) domain 3 long and 3 wide in the applied scale with horizontal distance to next one = 1, and mass $3/2 \times 3/2 \times 1/1 \times$ 938.27 MeV = 2.11 GeV, in comparison with the recorded 2.11 GeV, too.

### $B^{+,-}, B^0, \bar{B}^0$

The *Charm* Mesons form a complex lineage which can be extensively explored and produced by the present invention by the extrapolation and carriage to the other members of their pedigree and channels. The same applies to the *Bottom* mesons, with basic representatives $B^{+,-}$ and a neutral isodoublet.

There is one degree of transformation freedom left and possible to adopt by the *Bottom* mesons, namely, that the length of the transitional root vector trains, often identical to the charmed states or just a single, typically Meson step from them, is incorporated as the actual radial or semiaxis distance in over-all symmetrically enlarged SO(2) planes.

This proves to be the case in the B Mesons and can be transferred to the others. It is hence sufficient to manufacture the exemplary typical modes of the charged and neutral B varieties, the general principles and means of dictate the systematic exploration of the rest of the family as well.

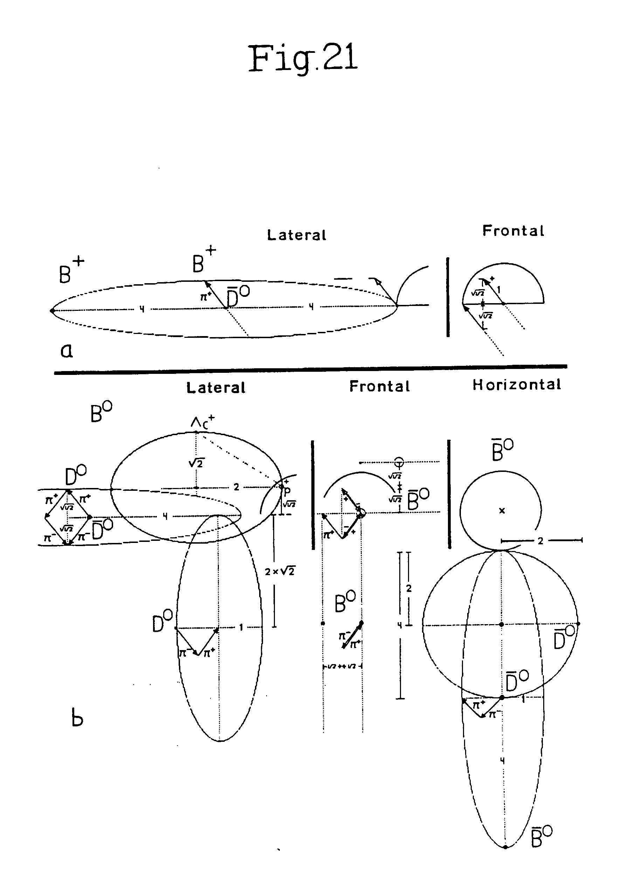

With reference to Figure 21 a, a single charged Pion from a neutral D *t* isospin endpoint spans a minor semiaxis = 1 and major semiaxis = 4 in an obliquely inclined elliptic SO(2) plane whose area is in consequence 4 times larger than the Proton equatorial plane. The angular distance to the next like plane is $0.5^{1/2}$ and the product mass $4 \times 1/0.5^{1/2} \times 938.27$ MeV = 5307.66 MeV = 5.31 GeV exactly as the recorded 5.28 GeV.

Figure 21 b shows three all-representative modes, including an observed Proton - $\Lambda_c$ (charmed Lambda) channel, and executions of the neutral isodoublet. By the $\pi^+$- $\pi^-$ transition the elliptic semiaxes are 4 and $0.5^{1/2}$ or $2 \times 2^{1/2}$ and 1 which with distance to neighbor = 0.5 also yield mass = 5.31 GeV as in the case also in the p- $\Lambda_c$ mode.

In $\bar{B}^0$, finally, $\pi^+$- $\pi^-$ vectors from $\bar{D}^0$ generate $\pi \times 4 \times 1$ or $\pi \times 2 \times 2$ SO(2) planes which with distance to the closest neighbor of $0.5^{1/2}$ yields the same mass number. In conclusion of the Mesons, identical permutations are performed by the present invention as in the observed spectrum, and the more in detail produced states have therefore served also to describe the true universality of the method and device. Although in most of the makings here, the global lattice part of the invention is not shown all the vector and semiaxis instalments and other operations are always made in and against this observator and realization framework.

### The Baryons

In the foregoing, the present principles and methods have been expounded parallel with the concrete construction plan. In the previous invention, basic Baryon embodiments were shaped by externally applied forming of their outer "Bags". The present invention is new and different in a number of fundamental ways as outlined before. Importantly, it effects the physical assembly and build, whether materially or by equivalent figurative techniques, of the internal vector scaffold constitution of the particles and their global lattice framework, where the separate channel vector elements have been exactly defined and manufactured. Both the neutral and charged Pions have been exactly defined and produced, and that applies to the other Meson as well as Lepton constitutional and channel vectors alike. They are executed as straight beams of defined length and angular orientation and put together in their observed sequences to create the genuine cage of the performed state.

The building elements of the assembly and splicing thus provided, also the actual build is highly specific and unique. As here recollected in the case of the Baryons, it follows a fourstage construction plan. First, the transition is manufactured by putting together the engaged channel elements. These are typically straight linear Pion root vector segments of unit length in the applied scale, where the neutral Pion is oriented in 90 degrees angle to the Cartesian co-ordinate axes in the charge-less horizontal and/or vertical equatorial planes of the global frame, and the charged Pions are inserted in the described diagonal orientation in the applied positive and negative charge direction, respectively. Likewise other Meson and Lepton vector channel and corresponding physical building elements have been realized in detail in the foregoing.

In the second stage, the assembled transition channel sequences structurally lead to the new $t$ isospin root vector end-point of the transformed state, exactly defined both as to discrete electromagnetical charge level in the global frame as well as the length to different origins in the parent state. These connections are physically built by inserting between the engaged, peripheral and central end-points, respectively, a straight, colored or uncolored, marked or un-marked beam of the defined length, and provided in the construction kit of the present invention whether materially as here exemplified or by equivalent installable vector segments in computer or other figurative operations. These elements provide the natural major semiaxis of the unit volume- and spheriodal symmetry-preserving transformation in question.

In the third stage its minor semiaxes are installed at the center of each new Baryon state, by likewise, from the prevailing volume- and symmetry-preserving condition exactly lengthdefined straight beams provided in the kit, radially extending in 90 degrees angle against the major semiaxis and in the remaining spatial inclination preferentially following the Cartesian co-ordinate orientation. These minor semiaxes are physically assembled, materially or figuratively, by the corresponding building elements and operations of the invention, and also yield the mass number as can be displayed by label or direct calculation in the applied medium.

In the fourth, facultative stage, the so constructed domain scaffold can be covered by a spheroidally approximated, transparent or opaque, colored or uncolored membrane or other coating, either automatically in the computer version or manually as in material modeling or artwork. This coverage is preferentially restricted to the separate Cartesian space segment where the transformation is made, but can also be continued by reflection in the opposing segment.

In all these respects the invention, realizing the inner build of the elementary particles and their transitions, channels and other spectroscopical properties, is new and unique. This will be further expounded by a number of Baryon states over and in both ends of the mass range. In fact, all Baryons can be produced by the defined operations and building elements of the invention but here just a number of them, yet quite representative of the whole family, are manufactured in detail. Again it must be re-emphasized that the invention is not about the baryon elementary particles and their features per se, but a direct means and device of manufacturing their physical modes by systematic build of the inner vector element construction kit constituents instead of externally forming their ready envelopes.

## $\Lambda^0$

The Nucleon has already been shown and lies in the first transformation layer with consequential $J^p$ number = 1/2 and also in other respects just as in reality: a geometrical domain where both the Neutron and Proton as well as Anti-Proton are naturally accommodated. As should appear from Figure 1, they can commute into each other in any of the Cartesian space segments over the actual differential Pion turning and Lepton tilting steps, so that it can be proclaimed with absolute certainty that it is and remains the definite real physical Nucleon embodiment. Its core thus constituted it can be clad by any coating materially or figurally as described before. The same applies to all following Baryons.

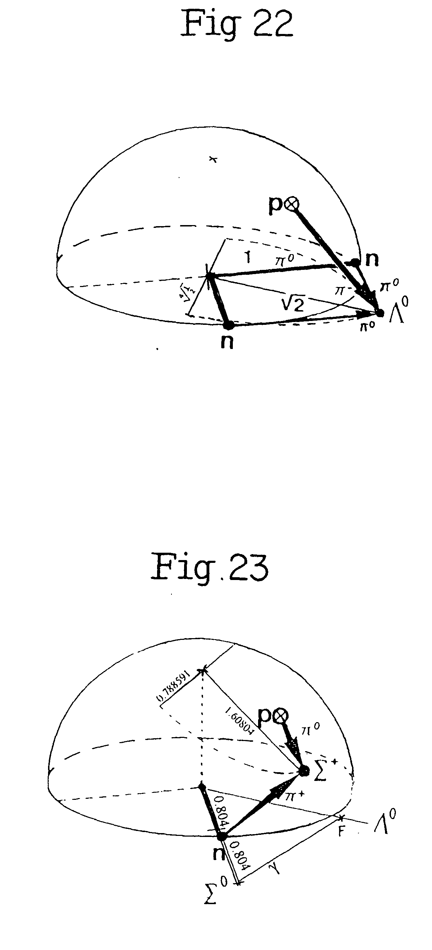

The lowest mass number of these is the $\Lambda^0$ singlet. Its explicit construction plan as shown in Figure 22 is to install in the first, $J^p$ = ½ level of the constituent transformation lattice and in any of its separate Cartesian space segments, from the endpoint of the Proton $t$ isospin root vector (vice versa in the anti-event) a negatively (positive from Anti-Proton) charged Pion vector step of unit length in 90 degrees angle to the Proton root vector and 45 degrees to the x and z Cartesian coordinate sides so that it connects with the equatorial plane at a lattice corner at a distance $2^{1/2}$ from the Nucleon center.

By inserting materially as here or by equivalent computer or other figurative operations this straight vector beam of the specified $2^{1/2}$ length and angular arrangement between these points, the $\Lambda^0$ major semiaxis is physically formed. Again with reference to Figure 22, the same manufacture is obtained when a neutral Pion root vector of unit length is spanned 90 degrees from the Neutron $t$ isospin root vector endpoint, so that identical, charged and neutal Pion channels, neutral electromagnetical charge and Jp number ½ as in reality are produced.

To preserve volume and symmetry, an ellipsoidal, to the lowest energy order symmetrical transformation is made, where both minor semiaxes extend at straight angles from the center. Their length are $0.5^{1/4}$ (fourth root of 0.5) = 0.840896415 in the applied scale, which can be indicated as such or arbitrarily shortened or expanded with the resulting mass as well (by the exemplified length 1/0.840896415 x 938.27 MeV = 1115.79736 MeV, to compare with the measured 1115.6 MeV).

The so manufactured domain scaffold can be covered as previously described, for instance by a pliable membrane, which can extend preferably over the Cartesian segment alone where the transformation occurs, or mirror-reflected in the diametrically opposing. Only the first variety is illustrated here. As a rule just the vector lattice construction will be demonstrated in the continuation, but it is maintained that it can always can be executed, either manually or automatically, as in $\Lambda^0$, just like DNA and other molecules are first constructed by their core and then covered in the applied rendering.

Another valuable feature of the present invention is that the $\Lambda^0$ outline extends outside of the Nucleon domain but sharing the lattice symmetry so as to be relatively well accommodable in the space and hence of a comparatively stable life-time, which is furthermore amenable for calculations from these factors. This is a general property of the present invention which further increases it uniqueness, but will as a rule not be further exemplified but occasionally mentioned in the following.

$\underline{\Sigma^{+,0,-}}$

The next lightest of the basic Baryon supermultiplets, the $\Sigma^{+,0,-}$ triplet, has an analogous manufacture. Still within the first, $J^p$ = ½ level of the constituent transformation lattice and in any of its separate Cartesian space segments the practically occurring Neutron - $\pi^+$ and Proton - $\pi^0$ root vector channel elements are inserted as shown in Figure 23, directly manufacturing the $t$ isospin root vector endpoints of $\Sigma^+$ ($\Sigma^-$ by inversion in the negative half-plane). When, as the next lowest energy order permutations, projecting them back to the Nucleon poles, as also shown for $\Sigma^+$ in Figure 23, there is a new major semiaxes formation which is inserted by splicing between each of the mentioned end-points a straight vector beam of length $[1,5^2 + 0.5^2 + (1-0.5^{1/2})^2]^{1/2}$ = 1.60804 and the illustrated angular orientation. The minor semiaxes extending 90 degrees from the poles in the lowest energy symmetric ellipsoidal transformation will be $(1/1.60804)^{1/2}$ = 0.788591 as can be indicated along or upon them (which will likewise only be occasionally mentioned in the continuation) and the gravitational quantum number 1/0.788591 x 938.27 MeV = 1189.8 MeV in comparison with the measured 1189.4 - 1197 MeV. The accommodation in the global lattice is a bit more skewed than in $\Lambda^0$ so that the lifetime is correspondingly altered but still relatively stable.

The $\Sigma^0$ is different. It is in practice as well as by the present invention whether materially or figuratively built by a rarer $\Lambda^0$ - $\gamma$ channel. Also with reference to Figure 23, this is constructed by installing from the focal point of $\Lambda^0$ an equally long = 1.137028 in the applied scale, straight $\gamma$ beam in 90 degrees angle to the $\Lambda^0$ major semiaxis back to the x or z coordinate axes of the equatorial plane. This point is at a distance of. 0.804 + 0.804 = 1.608 from the Nucleon center, so that when a straight building element of that length is inserted between the two, the $\Sigma^0$ major semiaxis is directly manufactured.

$\underline{\Delta^{++,+,0,-}}$

It is already becoming evident that the construction of the Baryon spectroscopy is by performing all the root vector channel and transformation permutations that the invention's lattice device and manufacture comprises, and in this regard exhibiting also the varying degree of likelihood that is prescribed by Quantum Mechanics as well. However, the $\Delta$ quadriplet is quite basic and its match with reality is again extensive and outstanding.

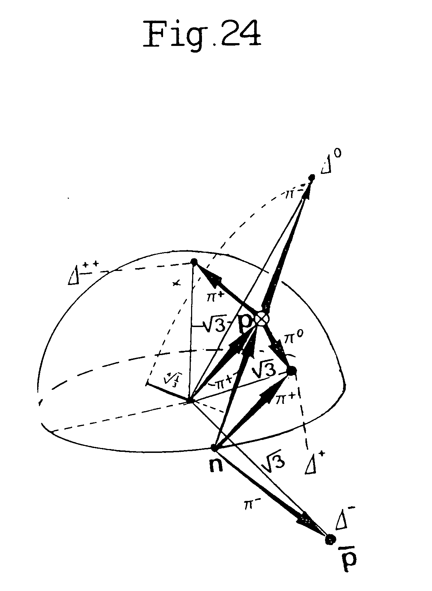

The structural making is straightforward. As shown in the construction plan of Figure 24, charged Pion vectors are spanned from the Neutron and Proton (mirror construction from the Anti-Proton) $t$ isospin root vector endpoints, as well as a Neutral Pion vector from the Proton (mirror construction from Anti-Proton). It is seen that new $t$ isospin root vector endpoints in the -,0,+ and ++ electromagnetical charge levels are established, and that from them new major semiaxes are manufactured when attaching straight vector elements of length $3^{1/2}$ between all these points and the Nucleon center.

It is again seen that an exact and extensive counterpart of reality is produced because all observed $\Delta^{++,+,0,-}$ channels and charges are constructed, the transformation is one level out in the lattice system with $J^p$ number 3/2 and the global symmetry accommodation still good and compatible with the observed semi-stable lifetime.

The mass in a symmetric spheroidal transformation that is manufactured by the arrangement of minor semiaxis bars of length $1/3^{1/4}$ = 0.76 perpendicularly against the major semiaxis at the center in the separate Cartesian segment (or mirror-reflected in the opposing) is 1/0.76 x 938.27 Mev = 1234.8 MeV to compare with the real range of 1230-1236 MeV, and can likewise be indicated in the manufacture which can be further coated etc. each state by itself or aspects of or their full and remarkably telling mounting range.

$\underline{\Xi^-}$ and $\underline{\Xi^0}$

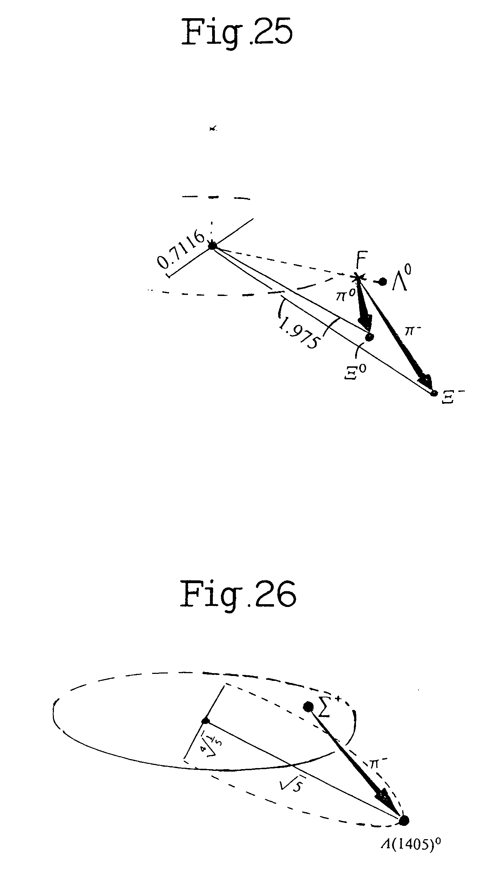

In the continuation, mostly a direct construction plan of the channel vectors and semiaxes is given and correspondence with $J^p$ numbers and lifetimes etc. not specifically commented. In the construction of $\Xi^0$, with reference to Figure 25, a neutral Pion vector element of length = 1 is inserted from the focal point of $\Lambda^0$ 90 degrees inclined to its major semiaxis.

It will establish a new neutral *t* isospin endpoint and in projection back to the Nucleon centre a major semiaxis of length 1.975 which is hence inserted between the two points in question. The minor semiaxes 90 degree arranged perpendicularly from the centre are of length 0.7116 in a symmetric transformation either in the separate Cartesian segment in question or reflected in the opposite segment. The mass will be 1/0.7116 x 938.27 MeV = 1318 MeV in comparison with the observed 1314.9 - 1321.3 Mev.

Figure 25 likewise mounts the same major semiaxis between the Nucleon centre and the *t* isospin endpoint reached by the installation of a negatively charged Pion root vector element of length 1 from the same focal point, so that again the same charge as well as other spectroscopical characteristics are manufactured as in the real $\Xi^-$.

$\underline{\Sigma(1385)^{+,0,-}}$

This is the first secondary Baryon transformation, i.e. coming from states beyond the Nucleon, in this case from $\Lambda$ (90 %) and $\Sigma$ (10%). When charged Pion vectors are inserted in the outward direction from $\Lambda^0$ they set up positively and negatively charged, respectively, *t* isospin endpoints that are 2.17 distanced from the $\Sigma$ poles establishing a major semiaxis that is realized by inserting a straight vector element of that length between these points (not shown).

The minor semiaxes in a symmetric ellipsoidal transformation are manufactured by straight vector elements of length 0.679 inserted perpendicular to the major semiaxis at the centre, with mass value 1382.2 MeV.

The neutral variety is constructed by charged Pion vector elements installed from the charged $\Sigma$ *t* isospin end-point and from the new ones inserting a straight major semiaxis beam of length 2.18 to the $\underline{\Lambda}$ $\underline{(1405)}$ poles where perpendicularly installed minor semiaxes of length 0.678 give a mass of 1385.3 MeV, so that the real range of 1383-1386 MeV is again produced, as are the actual channels, electromagnetical charge levels and $J^p$ number.

$\underline{\Lambda(1405)}$

The next permutation is drawn (Figure 26). In the present construction kit as well as in reality it is $\Lambda$ (1405), which is built by manufacturing its *t* isospin endpoint by charged Pion root vector elements of unit length installed in the outward direction from the charged $\Sigma$.s (only the $\Sigma^+$ - $\pi^-$ mode is made, the $\Sigma^-$ - $\pi^+$ is identical in the negative half-plane) to a lattice point in the horizontal plane whose distance to the Nucleon center is $5^{1/2}$. This major semiaxis is installed by a straight vector element of that length and orientation, and the minor semiaxes in a volume-preserving symmetric ellipsoidal transformation are inserted by straight beams of length 0.6687 from the center. The mass expression is 1/0.6687 x 938.27 MeV = 1403.1 MeV, in full correspondence with the recorded 1405 $\pm$ 5 MeV in practice.

The Baryon Resonances

Also the remaining Baryon supermultiplets can be constructed equally directly, exhaustively and exactly but are not shown here. After them come a virtual avalanche of more unstable events generically referred to as Resonances further out in the lattice with proportionately increased $J^p$ numbers and reduced life-times and rich and often overlapping spectrum by the crowding succession of parent states and corresponding permutations of channels and semiaxes, occasionally including taking over one of the minor ones. The present invention is as rich and matching: transition-, channel-, electromagnetical charge-, $J^p$- and mass-wise.

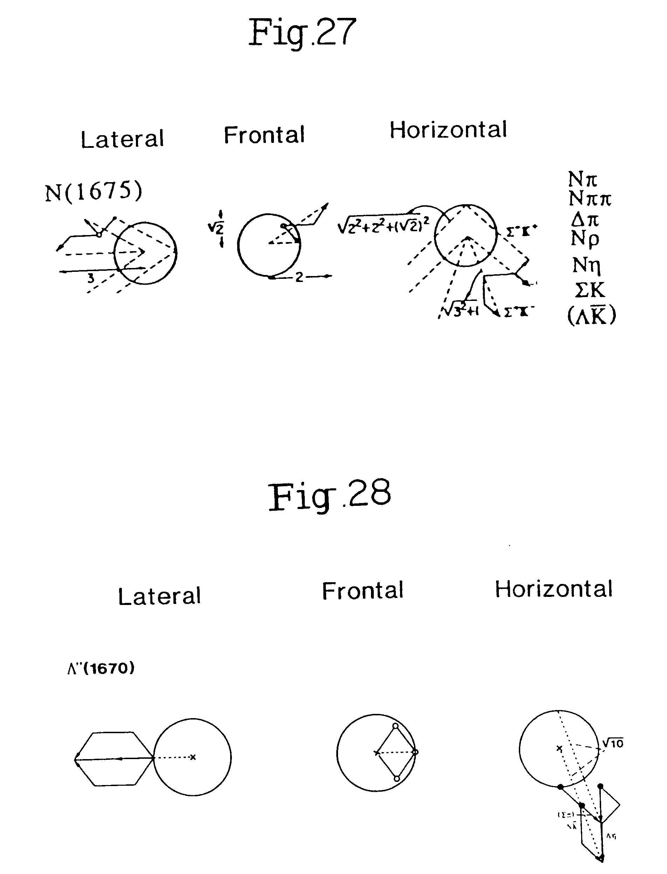

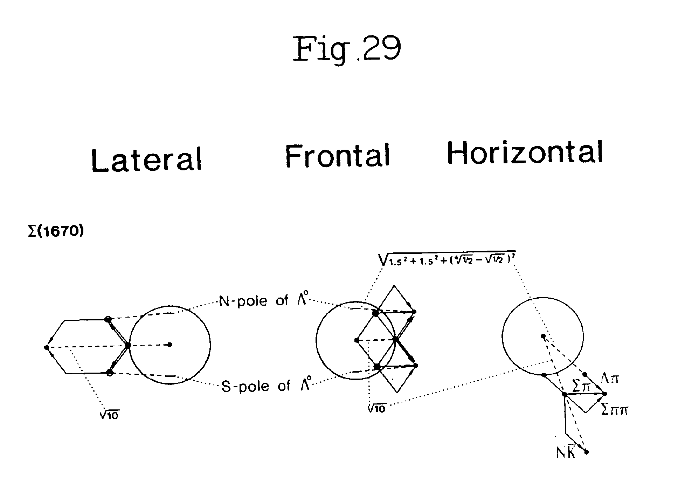

This will be demonstrated by a manufacture of the N(1675), $\Lambda$"(1670) and $\Sigma$(1670) states as drawn in figures 27, 28 and 29, respectively. Like in ensuing figures, the global gauge vector framework is not indicated but the free dissected transformation channel and major semiaxis installation proceeds in and against its strict co-ordination and alignment. The minor semiaxes are as a rule not shown, but straightforward to mount from the text. By the observed channel vector elements, inserted exactly as in the for maximal clarity plane projection construction drafts in question, mutual major semiaxis of length $10^{1/2}$ = 3.16228 is obtained to different centers, where perpendicular symmetrical volume-invariant ellipsoidal minor semiaxis vector elements of length $0.1^{1/4}$ = 0.56234 correspond to a mass of 1668.5 MeV in all of them.

The *Charm* Baryons

The other *(u,d,s)* Baryon Resonances, falling into the main N, $\Delta$, $\Lambda$, $\Sigma$ and $\Xi$ series are not performed here but can also be uniquely and exhaustively produced by the invention by the same new and specific method of directly installing the really occuring channel and consequential major and minor semiaxis vector elements in all possible real permutations.

To substantiate that these hold to the ultimate end of the spectrum the so far most "extreme", *Charm* Baryons will be manufactured. There are only three confirmed such Baryons: $\Lambda_c^+$, $\Sigma_c^{++,+,0}$ and $\Xi_c^{+,0}$ and they constitute an extra degree of transformation freedom in the structural making, too; like in reality preferentially descendent to the Proton (Anti-Proton in anti-event) and when hence centered there able to take over the unit root vector of this as one of the minor semiaxes so that the mass will be secondary to the other that contracts in the transformation.

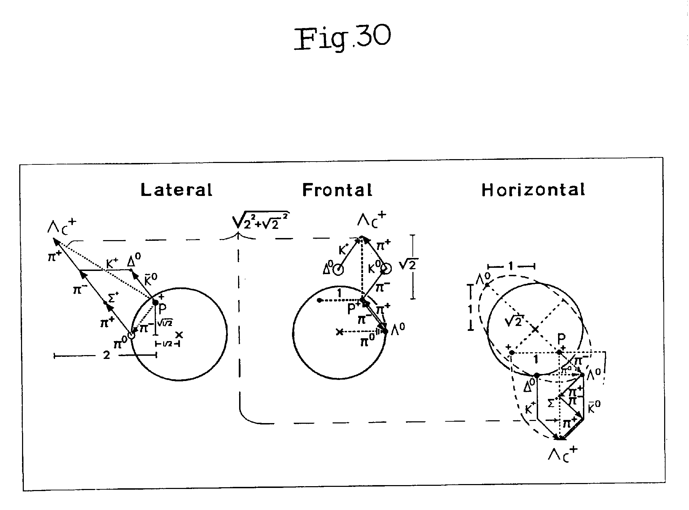

For maximal clarity, plane projection diagrams, Figures 30, 31 and 32, are again made here, which in the physical construction as well as in computer and similar figurative rendering can be put in the three-dimensional perspective. They show the same channel steps and sequences as in reality from the Proton root vector end-point or occasionally other Baryon states, which are indicated by their $t$ isospin vector end-point's location in the (not shown) global lattice.

In the structural manufacture as well as in computer-aided graphical or other figurative production it is possible to assemble in detail the channels through the sequential deposition of the involved vector elements. The end-points they arrive at are the origins of the new major semiaxis to the *Charm* center at the Proton site (Anti-proton in anti-state) in all cases except $\Xi_c^{+,0}$, which is related to $\Xi$.

In $\Lambda_c^+$, with measured mass 2.29 GeV, the observed channels are readily installed (Figure 30), and the straight major semiaxis element to the *Charm* center is of length $6^{1/2}$. With one perpendicular minor semiaxis of length = 1 taken over, the second in order to preserve volume and symmetry is mounted by a straight beam of length $1/6^{1/2}$ = 0.40825 in 90 degrees angle to the others. The mass expression is 1/0.40825 x 938.27 MeV = 2.298 GeV.

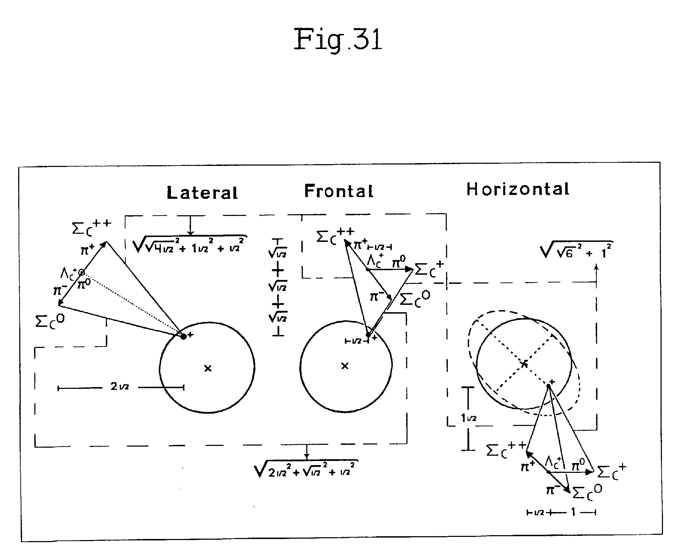

Also in $\Sigma_c^{++,+,0}$, with measured mass 2.45 GeV, the observed channels are directly installed (Figure 31). The straight major semiaxis element to the *Charm* center is here of length $7^{1/2}$.

Similarly, with one perpendicular minor semiaxis of length = 1 taken over, the second in order to preserve volume and symmetry is mounted by a straight beam of length $1/7^{1/2}$ in 90 degrees angle to the others. The mass is now $7^{1/2}$ x 938.27 MeV = 2.48 GeV.

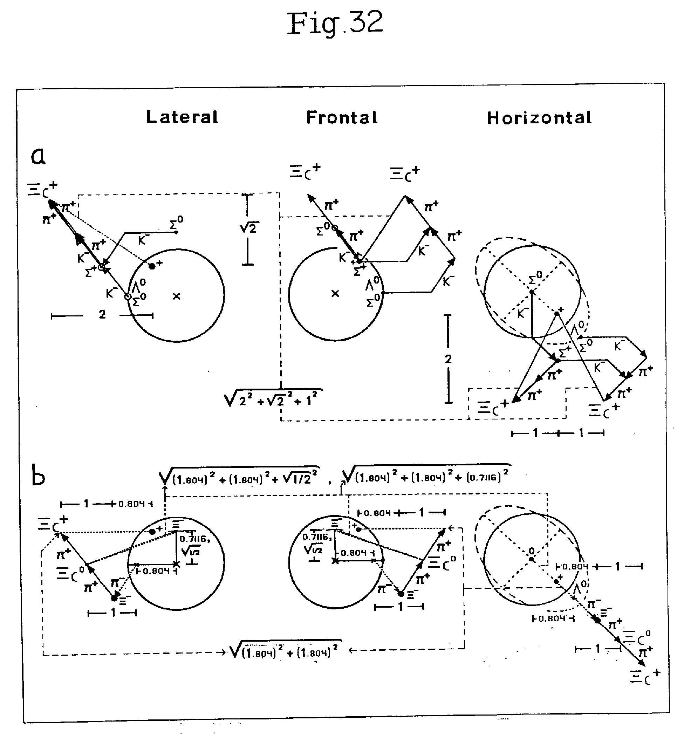

$\Xi_c^+$ has two varieties which both, with reference to Figure 32 a - b can be produced in the invention, too, one with major semiaxis = $7^{1/2}$, taken over minor semiaxis = 1, shortened minor semiaxis = $1/7^{1/2}$ and mass 2.48 GeV in comparison with the measured 2.47 GeV; and the other with major semiaxis $6.51^{1/2}$, taken over minor semiaxis = 1, shortened minor semiaxis = $1/6.51^{1/2}$ and mass 2.39 GeV in comparison with the measured 2.39 MeV as well.

Finally, there is a $\Xi_c^0$ recorded with mass 2.47 GeV which can likewise be constructed (Figure 32 b) with characteristic $\Xi^-$ - $\pi^+$ channel, major semiaxis of length $7^{1/2}$ or $7.0152^{1/2}$ and mass still 2.482-2.485 GeV.

particle gauge vector elements and symmetries which in an applied arbitrary unit scale and primarily within a separate Cartesian co-ordinate segment, by an exemplified direct structural build and installation as well as by equivalent operations also covered by the invention in computer or other figurative medium, exactly and exhaustively manufactures the real space elementary particle spectroscopy.

2. The total collection of Nucleon isospin and global co-ordination vectors and interchangeable quark-gluon binding matrix embodied in the Z and W Gauge vector Bosons and their charge isodoublet symmetries and mass numbers.

3. The one-dimensional Lepton symmetries, structural vector elements and arrangements performed as single channel steps of elementary particle transformations and in iterated sequences as the Muon, Electron/Positron, Neutrino and Photon states and their precise mass numbers, electromagnetical charges and other properties.

4. The realization of the differential SU(2) x U(1) product geometrical domain of the Mesons and their vector elements as singly performed in elementary particle transformations and in composite embodiment of all real states, in detail produced of the charged and neutral Pions, the Kaons, $\eta$, $\rho(770)$, $\omega$ (783) and the ground *Charm* and *Bottom* Mesons and their channels, transformations, electromagnetical charges, masses and other properties.

5. The realization of the SO(3) x O(5) orthogonal coset decomposition geometrical domain, symmetries and vector elements of the Baryons and their channels and transformations with detailed manufacture of the basic Baryon supermultiplets, the representative N(1675), $\Lambda''(1670)$ and $\Sigma(1670)$ Resonances and all confirmed *Charm* Baryon states and their channels, transformations, electromagnetical charges, masses, $J^p$ numbers and other properties.

6. The set of length-, configuration- and orientation-defined structural building elements of individual and combined root vectors and major and minor semiaxes and their mounting both to the global framework and coordination lattice and separate embodiments and accommodation of the particle events therein.

**Claims**

1. An ordinary physical construction kit of elementary

Fig .1

# Fig.2

# Fig.3

# Fig.4

# Fig.5

# Fig.6

# Fig.7

FSC x 1/2$^{1/2}$

# Fig.8

Fig.9

# Fig. 10

# Fig. 11

# Fig.12

# Fig.13

# Fig.14

# Fig.15

$\eta$

# Fig.16

$\rho(770)$

# Fig.17

ω(783)a

ω(783)b

# Fig. 18

# Fig .19

# Fig.20

# Fig.21

# Fig 22

# Fig.23

# Fig.24

# Fig.25

# Fig.26

# Fig.27

Lateral    Frontal    Horizontal

N(1675)

$N\pi$
$N\pi\pi$
$\Delta\pi$
$N\rho$
$N\eta$
$\Sigma K$
$(\Lambda\bar{K})$

# Fig.28

Lateral    Frontal    Horizontal

Λ"(1670)

# Fig.29

**Lateral**      **Frontal**      **Horizontal**

Σ(1670)

$$\sqrt{1.5^2 + 1.5^2 + (\sqrt[4]{1/2} - \sqrt{1/2})^2}$$

N-pole of Λ°

S-pole of Λ°

$\sqrt{10}$

$\sqrt{10}$

Σπ

Λπ

Σππ

N$\overline{K}$

# Fig.30

# Fig.31

# Fig.32

**European Patent
Office**

## DECLARATION

**Application Number**

which under Rule 45 of the European Patent Convention EP 02 02 7187
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G09B23/20 |

In view of the wording of the claim 1
presently on file, which renders it
difficult, if not impossible, to determine
the matter for which protection is sought,
the present application fails to comply
with the clarity requirements of Article
84 EPC to such an extent that a meaningful
search is impossible.

A meaningful search is not possible on the
basis of claims 2-6 because claims 2-6 are
directed to mathematical methods and
models [Article 52 (2)(a) EPC]

Further, the description does not enable
the person skilled in the art to identify
a technical problem to be solved, nor to
clearly identify functional features of a
device -or steps of a method- which could
enable the person skilled in the art to
understand or reproduce the invention.
Thus the present application also fails to
comply with the clarity requirements of
Article 83 EPC.

Consequently, no search report can be
established for the present application.

The applicant's attention is drawn to the
fact that a search may be carried out
during examination following a declaration
of no search under Rule 45 EPC, should the
problems which led to the declaration
being issued be overcome (see EPC
Guideline C-VI, 8.5).

---
-----

| Place of search | Date | Examiner |
|---|---|---|
| MUNICH | 28 March 2003 | Hanon, D |

EPO FORM 1504 (P04C37)